# EUROPEAN PATENT SPECIFICATION

(11) **EP 3 425 230 B1**
(45) Date of publication and mention of the grant of the patent: **28.02.2024**
(21) Application number: 18153542.8
(22) Date of filing: 25.01.2018
(51) Int. Cl.: F16D 9/00

(54) **AUTOMATICALLY ACTUATED DISCONNECT COUPLINGS**
AUTOMATISCH BETÄTIGTE TRENNKUPPLUNGEN
ACCOUPLEMENTS DE DÉCONNEXION ACTIONNÉS AUTOMATIQUEMENT

(30) Priority: 27.01.2017 US 201715418387
(43) Date of publication of application: 09.01.2019
(73) Proprietor: Hamilton Sundstrand Corporation, Charlotte, NC 28217 (US)
(72) Inventor: LEGROS, Craig R., Rockford, IL Illinois 61109 (US); BEHLING, David S., Belvidere, IL Illinois 61008 (US)
(74) Representative: Dehns

(56) References cited:
- EP-A1- 3 121 473
- DE-A1-102015 211 588
- JP-A- H10 299 415
- JP-B2- 4 319 149
- US-A- 4 244 455
- US-A- 4 434 881

## Description

### BACKGROUND OF THE INVENTION

### 1. Field of the Invention

The present disclosure generally relates to couplings, and more particularly to disconnect couplings for generators such as in aircraft electrical systems.

### 2. Description of Related Art

Generators, such as in aircraft electrical systems, commonly include a rotor supported for rotation relative to a stator by a bearing. The rotor typically carries magnets and/or winding which generate a magnetic field. As the rotor rotates the windings induce electric current in windings arranged on the stator, the current flowing through the electrical system to various power consuming devices supplied by the electrical system. An engine generally provides the mechanical rotation to the rotor through a coupling for rotating the rotor relative to the stator.

Some generators include a disconnect mechanism arranged between the prime mover and the generator rotor. The disconnect mechanism allows the generator rotor to be disconnected from the prime mover, which can be desirable under certain conditions such as when the load on the electrical system can be met with other power sources or the generator requires maintenance. Disconnection of the generator from the prime move is typically initiated manually, such as by an operator remotely actuating a disconnect mechanism through a user interface. For example, in aircraft, a generator disconnect switch may be located in the cockpit for the pilot to disconnect the generator, as appropriate.

Such conventional methods and systems have generally been considered satisfactory for their intended purpose. However, there is still a need in the art for improved systems and methods for mechanically disconnecting generators from sources of generator rotation. The present disclosure provides a solution for this need. US 4,434,881 relates to a disconnector assembly. JPH10299415A and JP4319149B2 relate to automatic disconnect couplings.

### SUMMARY OF THE INVENTION

An automatic disconnect coupling as defined in claim 1 is provided.

A generator arrangement as defined in claim 9 is provided.

A method as defined in claim 12 is provided.

These and other features of the systems and methods of the present invention will become more readily apparent to those skilled in the art from the following detailed description of the preferred embodiments taken in conjunction with the drawings.

### BRIEF DESCRIPTION OF THE DRAWINGS

So that those skilled in the art to which the present invention appertains will readily understand how to make and use the devices and methods of the present invention without undue experimentation, embodiments thereof will be described in detail herein below with reference to certain figures, wherein:
Fig. 1 is a schematic view of an exemplary embodiment of an aircraft electrical system constructed in accordance with the present disclosure, showing a generator connected to a gas turbine engine by an automatic disconnect coupling;
Fig. 2 is a schematic view of the generator shown in Fig. 1, showing a drive member connected between the gas turbine engine and the generator;
Fig. 3 is a cross-sectional view of the generator shown in Fig. 1, showing the generator connected to the engine while a retainer retains the disconnect coupling plunger in a disengaged position;
Fig. 4 is a cross-sectional view of the generator shown in Fig. 1, showing generator disconnected from the engine when the retainer allows the disconnect coupling plunger to move to an engaged position;
Fig. 5 is a functional schematic view of the generator shown in Fig. 1, showing the disconnect coupling automatically disconnecting the generator from the engine in response to excitation communicated to the solenoid by rotational unbalance of the generator; and
Fig. 6 is process flow diagram of an exemplary embodiment of a method of automatically disconnecting a generator from a gas turbine engine, showing steps of the method.

### DETAILED DESCRIPTION OF THE PREFERRED EMBODIMENTS

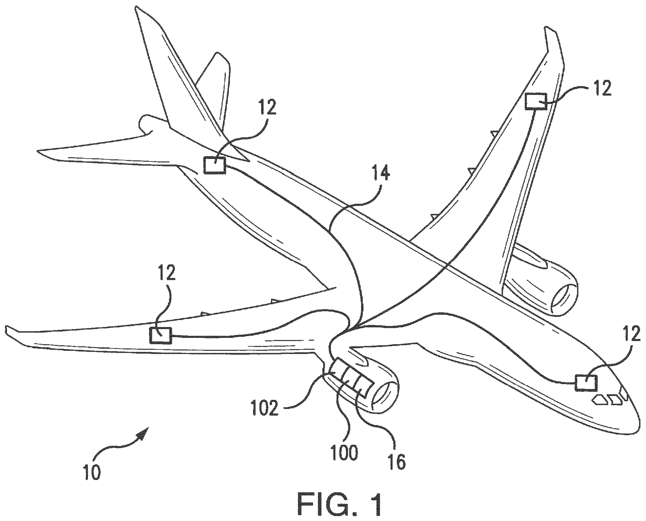

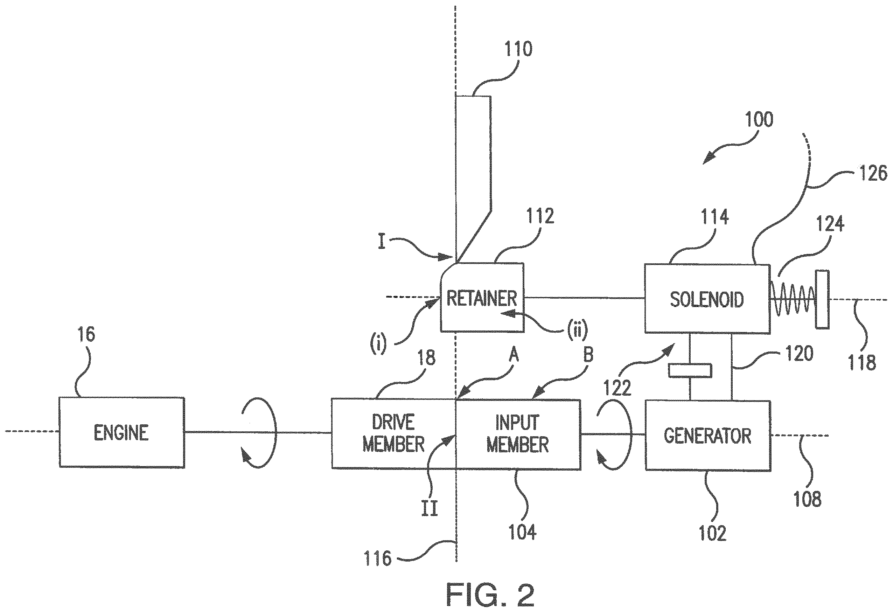

Reference will now be made to the drawings wherein like reference numerals identify similar structural features or aspects of the subject disclosure. For purposes of explanation and illustration, and not limitation, a partial view of an exemplary embodiment of an automatic disconnect coupling in accordance with the disclosure is shown in Fig. 1 and is designated generally by reference character 100. Other embodiments of automatic disconnect couplings, generator having such disconnect couplings, and methods of automatically disconnecting generators in accordance with the disclosure, or aspects thereof, are provided in Figs. 2-6, as will be described. The systems and methods described herein can be used in aircraft electrical systems, such as for automatic disconnect coupling for generators, though the present disclosure is not limited to aircraft electrical systems or to generator couplings in general.

Referring to Fig. 1, an aircraft electrical system 10 is shown. Electrical system 10 includes a plurality of power-consuming devices 12 connected to a generator 102 by a power distribution bus 14. Generator 102 is operably connected to a prime mover 16, e.g., a gas turbine engine, by an automatic disconnect coupling 100. Although illustrated herein as an aircraft electrical system, it is to be understood and appreciated that the present disclosure can benefit other types of electrical systems.

With reference to Fig. 2, generator 102 is shown. Generator 102 is operably connected to gas turbine engine 16 by a drive member 18. In the illustrated exemplary embodiment an accessory gearbox 20 with a constant speed drive 22 is arranged between gas turbine engine 16 and generator 102. Accessory gearbox 20 converts drive rotation 24 from gas turbine engine 16 into input rotation 26 for rotating a rotor portion 106 of generator 102 relative to a stator portion 140 of generator 102. Constant speed drive 22 is configured to convert drive rotation 24 provided by gas turbine engine 16 into constant speed input rotation 26, thereby enabling generator 102 to rotate at constant speed notwithstanding variable speed operation of gas turbine engine 16. In an exemplary embodiment generator 102 is configured and adapted for rotation at 6000 rotations per minute (rpm) to apply 235 volts of alternating current (AC) power. Although illustrated in Fig. 2 with a constant speed drive arranged in an accessory gearbox, it is also contemplated that a constant speed drive, e.g. a constant speed drive 23 (shown in dashed outline), can be arranged within an integrated drive system generator arrangement.

Automatic disconnect coupling 100 is arranged on a drive end 101 of generator 102. Arranging automatic disconnect coupling 100 of drive end 101 of generator 102 allows for incorporation of an automatic disconnect functionality into legacy generator arrangements. In certain embodiments, automatic disconnect coupling 100 can be arranged on an anti-drive end 103 of generator 102. Arranging automatic disconnect coupling 100 on anti-drive end 103 of generator 102 on a side of generator 102 axially opposite drive end 101, providing access to automatic coupling 100 from a side opposite gas turbine engine 16 and simplifying maintenance.

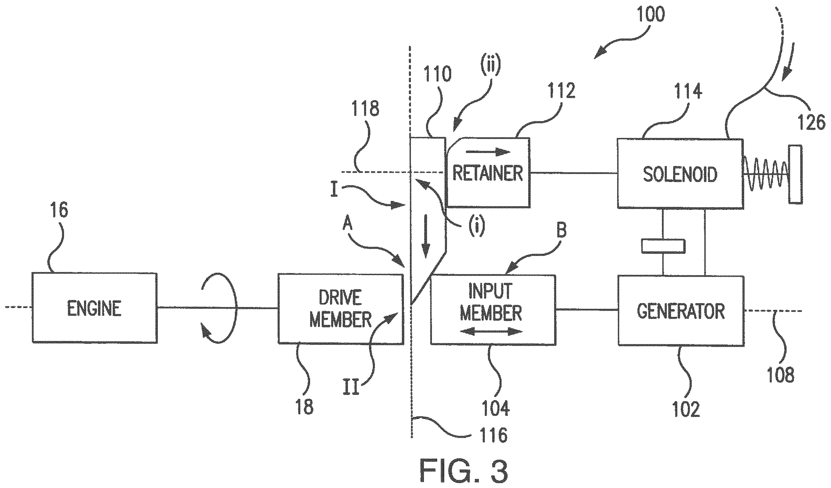

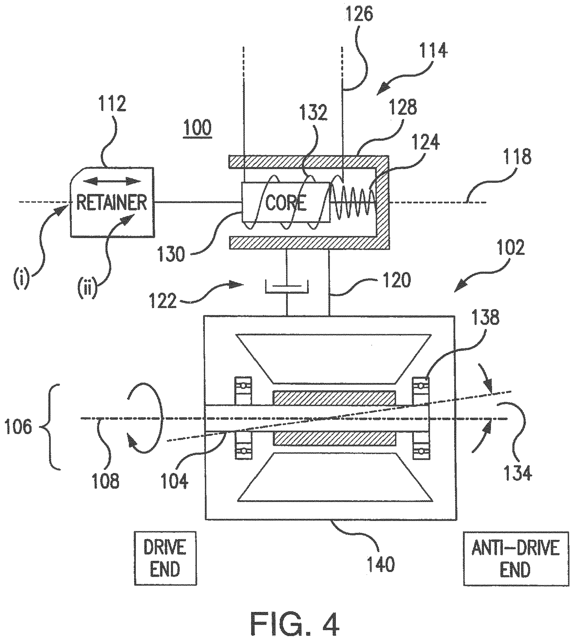

With reference to Figs. 3 and 4, generator 102 is shown. Generator 102 includes a rotor portion 106 and a stator portion 140. Rotor portion 106 includes an input member 104 carrying windings or permanent magnets 112 arranged along a rotation axis 108. Input member 104 has face teeth 116 (shown in Fig. 2) arranged at the generator drive end 101 (shown in Fig. 2) that oppose face teeth 28 (shown in Fig. 2) of drive member 18, and is movable between a connected position 120 (shown in Fig. 2) and a disconnect position 122 (shown in Fig. 2). When in the connected position 120, the input member face teeth 116 intermesh with the drive member face teeth 28 such that input member 104 and drive member 18 are rotationally fixed relative to one another. When in the disconnected position 122 the input member face teeth 116 are axially spaced apart from the drive member face teeth 28 such that input member 104 is rotationally free relative to drive member 18. As will be appreciated, separating the input member face teeth 116 from the drive member face teeth 28 disconnect the generator from the rotation source such that the generation rotor stops rotating and power generation ceases.

Stator portion 140 includes housing 128, a bearing arrangement 138, automatic disconnect coupling 100, and stator windings 126. Bearing arrangement 138 rotatably supports rotor portion 106 for rotation about rotation axis 108. Stator windings 126 are electromagnetically coupled to windings or permanent magnets 112 such that rotation of rotor portion 106 about rotation axis 108 induces an electrical current in stator windings 126, which is available from providing electrical power to power consuming devices 12 arranged in an aircraft electrical system 10.

Automatic disconnect coupling 100 includes a plunger 110 and a retainer 112. Plunger 110 is arranged along a plunger axis 116 and is movable along plunger axis 116 between an engaged position 134 and a disengaged position 136. A plunger biasing member 138 biases plunger 110 toward the engaged position 134. Plunger axis 116 is angled relative to rotation axis 108, e.g., at a 90-degree angle, such that plunger 110 frictionally contacts a ramp 140 of input member 104 when in engaged position 134.

Ramp 140 extends circumferentially about input member 104 and is axially sloped along rotation axis 108. The axial slope of ramp 140 is such that frictional contact of plunger 110 with ramp 140 cooperates with rotation of input member 104 to displace input member 104 along rotation axis 108 between connected position 120 and disconnected position 122. An input member biasing 142 biases input member 104 toward the connected position 120 such that, when plunger 110 is in disengaged position, 136, input member 104 remains rotationally fixed relative to drive member 18 in the connected position 120. In the disengaged position 136, plunger 110 is spaced apart from input member 104.

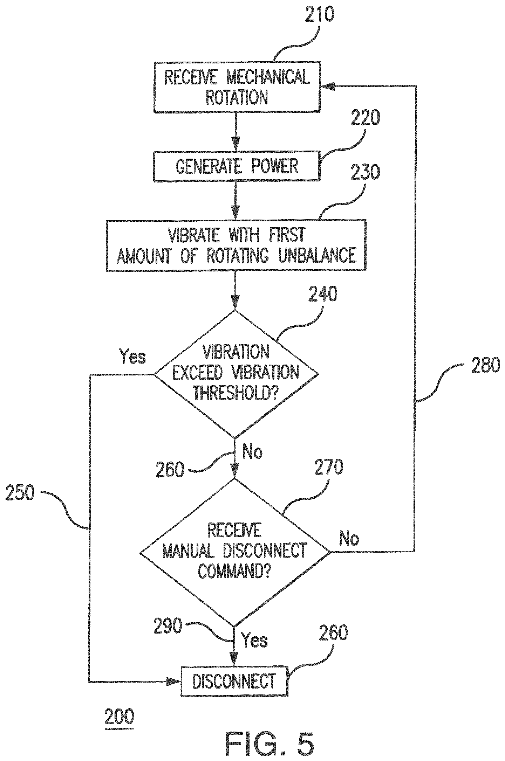

With reference to Fig. 5, retainer 112 is arranged along a retainer axis 118 between a locked position 146 and an unlocked position 148. In the unlocked position 148 retainer 112 is spaced apart from plunger 110, and plunger biasing member 138 drives plunger 110 to the engaged position 134 (shown in Fig. 4) such that input member 104 moves from connected position 120 to disconnected position 122, disconnecting generator 102 from gas turbine engine 16. In the locked position 146 retainer 112 retains plunger 110 in disengaged position 136, input member 104 remaining in connected position 120 such that rotor portion 106 rotates relative to stator portion 140, thereby generating electrical power.

A solenoid 108 is operably connected to retainer 112. Solenoid 108 includes a core 130, a coil 132, and a retainer biasing member 124. Core 130 is fixed relative to retainer 112 for displacing retainer 112 between locked position 146 and unlocked position 148 along retainer axis 118 upon manual actuation. Manual actuation is effected by application of an actuation current 158 to coil 132, coil 132 extending about core 130 and electromagnetically coupling to core 130 with an electromotive force upon application of actuation current 158 to coil 132. A manual actuation lead 160 is connected to coil 132 for applying actuation current 158 to coil 132, such as by actuation by an operator switch arranged on the flight deck of an aircraft. Solenoid 108 is dynamically coupled to input member 104 via a damping arrangement 120 with a damping coefficient 122, vibration of input member 104 from rotational unbalance of input member 104 being communicated therethrough as excitation 166 to retainer 112 and retainer biasing member 124.

Damping coefficient 122 is tuned such that a fundamental frequency of retainer 112 and retainer biasing member 124 is tuned to the rotational speed of input member 104. For example, if input member 104 has a rotational speed of 6000 rotations per minute, the fundamental frequency of retainer 112 and retainer biasing member 124 as a spring-mass system is about 100 hertz. This sensitizes retainer 112 and retainer biasing member 124 to vibrational excitation of input member 104, causing vibration of input member 104 associated with rotational unbalance of input member 104 above a predetermined value displace retainer 112 from the locked position 146 without application of actuation current 158 to coil 132. As explained above, movement of retainer 112 from locked position 146 causes input member 104 to disconnect from drive member 18, thereby effecting automatic disconnection of generator 102 from gas turbine engine 16. It is contemplated that the predetermined value be below a threshold at which vibration, e.g., from failure of a bearing supporting input member 104, causes excessive noise or damage to generator 102, accessory gearbox 20, or gas turbine engine 16 connected to input member 104.

With reference to Fig. 6, a method 200 of automatically disconnecting a generator, e.g., generator 102 (shown in Fig. 1), is shown. Method 200 includes receiving mechanical rotation an input member, e.g., input member 104, from a source of mechanical rotation, e.g., gas turbine engine 16, as shown with box 210. The generator generates electrical power while receiving the mechanical rotation and vibrates according a first amount of rotational unbalance in the rotor portion, e.g., rotor portion 106 (shown in Fig. 2), as shown with box 220. A damper with a damping coefficient communicates vibration from the input member to a retainer, e.g., retainer 112, and retainer biasing member, e.g., retainer biasing member 158, as shown with box 230.

When the rotational unbalance communicated by the input member is below a predetermined level, input member 104 remains connected to a drive member, e.g., drive member 18, as shown with box 240. When the rotational unbalance communicated by the input member exceeds the predetermined level, input member 104 automatically disconnects from the drive member, as shown with box 250. The input member can also disconnect from the drive member upon receipt of an actuation current, e.g., actuation current 158, as shown with box 260. Otherwise, the generator remains connected to the engine and continues to generate electrical power, as shown with arrow 270.

Rotating machinery typically has some amount uneven distribution of mass around an axis of rotation, which is typically referred to as rotating unbalance. Balance in rotating machinery is commonly determined by measuring misalignment between the center of mass of the rotating machine rotor and rotation axis, i.e. the geometric axis, of the rotating machine rotor. The rotating unbalance causes a moment during rotation, giving the rotor a wobbling movement during rotation, which is typically communicated to the stator portion of the rotating machine as vibration. Since vibration can cause noise, operator fatigue, and/or damage to the rotating machine, rotating unbalance is typically limited by balancing the rotating machine rotor and providing damping to stationary components to absorb residual rotating unbalance remaining once the rotor is balanced. In high speed rotating machinery, such as generators for aircraft electrical systems, balance is typically carefully controlled to limit vibration and the associated noise, fatigue, and/or damage that can occur from excessive amounts of vibration.

One challenge to rotating unbalance is that rotor balance can change during service, for example from bearing wear. If undetected, increased rotating unbalance can exert increased rotating loadings to the static portions of the rotating machine, increasing the magnitude of vibration and noise associated with operation of the rotating machine. If undetected, prolonged operation of the rotating machine with increased rotating unbalance can damage the rotating machine and/or the surrounding structure, reducing availability.

In embodiments described herein an automatic disconnect coupling is provided which automatically disconnects the rotor of a rotating machine when rotating unbalance exceeds a predetermined level, ceasing application of loads associated with the rotating unbalance on the surrounding structure. In certain embodiments, a spring mass of a coupling retainer is in mechanical communication with the rotating machine rotor to receive excitation therefrom. The spring mass has a fundamental frequency tuned to the rotational speed of the rotating machine rotor such that, when the one per revolution of the excitation of the rotating unbalance exceeds a predetermined value, the spring mass causes a coupling retainer to unlock the coupling, disconnecting the rotor from the source of mechanical rotation. This automatically disconnects the rotor, eliminating the rotating loads that would otherwise be exerted on the surrounding static structure. In accordance with certain embodiments, generators employing such automatic disconnect couplings can be less massive that otherwise required as generator static structure is protected from high static loadings by the automatic disconnect feature of the coupling.

The methods and systems of the present invention, as described above and shown in the drawings, provide for disconnect couplings and generator arrangements with superior properties, including reduced collateral damage to generator and gearbox static structures like housing from generator bearing failures which could otherwise cause in-flight engine shutdowns.

## Claims

1. An automatic disconnect coupling (100), comprising:
a retainer (112); and
a biasing member (124) coupled to the retainer (112) and arranged to communicate excitation from a generator input member (104) to the retainer (112),
wherein the retainer (112) and biasing member have a fundamental frequency tuned to rotational speed of the generator input member to automatically disconnect the input member (104) from a drive member (18) when rotating unbalance of the input member exceeds a predetermined level; and
**characterised in that**,
a solenoid (108) with a core (130) and a coil (132) operatively connected to the retainer, wherein the retainer is fixed relative to the solenoid core, wherein the solenoid is arranged to communicate rotational imbalance of the input member (104) as excitation to the retainer and biasing member, wherein the core is fixed relative to retainer for displacing retainer between locked position and unlocked position along retainer axis upon manual actuation, wherein the manual actuation is effected by application of an actuation current to a coil, wherein the coil extends about the core and electromagnetically couplings to the core with an electromotive force upon application of actuation current to the coil, and a manual actuation lead (160) is connected to the coil for applying actuation current to the coil, such as by actuation by an operator switch arranged on the flight deck of an aircraft; and
wherein the solenoid is dynamically coupled to the generator input member (104) by a damping arrangement (120) with a damping coefficient (122), wherein the damping coefficient is tuned such that a fundamental frequency of the retainer and biasing member is tuned to the rotational speed of the input member.

2. The coupling as recited cited in claim 1, further comprising a manual disconnect lead connected to the solenoid coil (132).

3. The coupling as recited in claim 1, wherein the retainer (112) has a locked position and an unlocked position defined along a retainer axis (118), the retainer retaining connection of the input member (104) to the drive member (18) in the locked position, the input member separating from the drive member when displaced from the locked position.

4. The coupling as recited in claim 1, further comprising a plunger (110) angled relative to the retainer (112) and having engaged and disengaged positions, wherein the biasing member (132) biases the retainer toward the plunger to lock the plunger in the disengaged position.

5. The coupling as recited in claim 4, wherein the plunger (110) has an engaged position, the retainer (112) arranged to lock the plunger in the disengaged position when the rotating unbalance of the input member (104) is below the predetermined level; or
wherein the plunger has an disengaged position, the retainer arranged to allow movement of the plunger to the engaged position when the rotating unbalance of the input member is below the predetermined level.

6. The coupling as recited in claim 1, further comprising a plunger biasing member (138) urging the plunger toward the input member (104).

7. The coupling as recited in claim 1, wherein the input member (104) includes face teeth (116) a ramp (140), wherein the face teeth and ramp are disposed on a common end of the input member.

8. The coupling as recited in claim 1, wherein the input member (104) includes face teeth (116) and a ramp (140), wherein the face teeth and ramp are disposed on opposite ends of the input member.

9. A generator arrangement, comprising:
an input member (104) arranged along a rotation axis (108);
a stator supporting the input member for rotation about the rotation axis; and
an automatic disconnect coupling (100) as recited in claim 1 connected between the stator and the input member, the core being movable along a retainer axis parallel to the rotation axis.

10. The generator arrangement as recited in claim 9, further comprising a constant speed drive (22) operably connected to the input member (104).

11. The generator arrangement as recited in claim 10, wherein the constant speed drive (22) and the input member (104) are arranged within a common housing (128); or
wherein the constant speed drive is housing within an accessory gearbox (20).

12. A method of automatically disconnecting a generator input member from a drive member in a generator arrangement of any of claims 9-11, comprising:
exciting a retainer with rotational unbalance of a generator input member;
retaining connection of the input member with a drive member when the rotational unbalance at a fundamental frequency of a retainer is below a predetermined value; and
disconnecting the input member from the drive member when the rotational unbalance exceed the predetermined value.

13. The method as recited in claim 12, further comprising re-connecting the input member to the drive member, and manually disconnecting the input member from the drive member.

## Patentansprüche

1. Automatische Trennkupplung (100), umfassend:
einen Halter (112); und
ein Vorspannelement (124), das an den Halter (112) gekoppelt und zum Übertragen von Erregung von einem Generatoreingangselement (104) an den Halter (112) angeordnet ist,
wobei der Halter (112) und das Vorspannelement eine Grundfrequenz aufweisen, die auf eine Drehzahl des Generatoreingangselements abgestimmt ist, um das Eingangselement (104) automatisch von einem Antriebselement (18) zu trennen, wenn eine Unwucht des Eingangselements ein vorbestimmtes Niveau überschreitet; und
**gekennzeichnet durch**:
einen Elektromagnet (108) mit einem Kern (130) und einer Spule (132), der mit dem Halter wirkverbunden ist, wobei der Halter relativ zu dem Elektromagnetkern fixiert ist, wobei der Elektromagnet zum Übertragen von Unwucht des Eingangselements (104) als Erregung an den Halter und das Vorspannelement angeordnet ist, wobei der Kern relativ zu dem Halter fixiert ist, um den Halter nach manueller Betätigung zwischen einer verriegelten Position und einer entriegelten Position entlang der Halterachse zu verschieben, wobei die manuelle Betätigung durch Anlegen eines Betätigungsstroms an eine Spule bewirkt wird, wobei sich die Spule um den Kern erstreckt und sich nach Anlegen von Betätigungsstrom an die Spule mit einer elektromotorischen Kraft elektromagnetisch an den Kern koppelt, und eine Leitung (160) zur manuellen Betätigung zum Anlegen von Bestätigungsstroms an die Spule, wie durch Betätigung eines auf dem Flugdeck eines Luftfahrzeugs angeordneten Bedienschalters, mit der Spule verbunden ist; und
wobei der Elektromagnet durch eine Dämpfungsanordnung (120) mit einem Dämpfungskoeffizienten (122) dynamisch an das Generatoreingangselement (104) gekoppelt ist, wobei der Dämpfungskoeffizient derart abgestimmt ist, dass eine Grundfrequenz des Halters und des Vorspannelements auf die Drehzahl des Eingangselements abgestimmt ist.

2. Kupplung nach Anspruch 1, ferner umfassend eine Leitung zur manuellen Trennung, die mit der Elektromagnetspule (132) verbunden ist.

3. Kupplung nach Anspruch 1, wobei der Halter (112) eine verriegelte Position und eine entriegelte Position aufweist, die entlang einer Halterachse (118) definiert sind, wobei der Halter die Verbindung des Eingangselements (104) mit dem Antriebselement (18) in der verriegelten Position hält, wobei sich das Eingangselement von dem Antriebselement trennt, wenn er aus der verriegelten Position verschoben wird.

4. Kupplung nach Anspruch 1, ferner umfassend einen Kolben (110), der relativ zu dem Halter (112) gewinkelt ist und eine eingerückte und eine ausgerückte Position aufweist, wobei das Vorspannelement (132) den Halter in Richtung des Kolbens vorspannt, um den Kolben in der ausgerückten Position zu verriegeln.

5. Kupplung nach Anspruch 4, wobei der Kolben (110) eine eingerückte Position aufweist, der Halter (112) zum Verriegeln des Kolbens in der ausgerückten Position angeordnet ist, wenn die Unwucht des Eingangselements (104) unter dem vorbestimmten Niveau liegt; oder
wobei der Kolben eine ausgerückte Position aufweist, der Halter zum Ermöglichen einer Bewegung des Kolbens in die eingerückte Position angeordnet ist, wenn die Unwucht des Eingangselements unter dem vorbestimmten Niveau liegt.

6. Kupplung nach Anspruch 1, ferner umfassend ein Kolbenvorspannelement (138), das den Kolben in Richtung des Eingangselements (104) zwingt.

7. Kupplung nach Anspruch 1, wobei das Eingangselement (104) Stirnzähne (116), eine Rampe (140) aufweist, wobei die Stirnzähne und die Rampe an einem gemeinsamen Ende des Eingangselements angeordnet sind.

8. Kupplung nach Anspruch 1, wobei das Eingangselement (104) Stirnzähne (116) und eine Rampe (140) aufweist, wobei die Stirnzähne und die Rampe an gegenüberliegenden Enden des Eingangselements angeordnet sind.

9. Generatoranordnung, umfassend:
ein Eingangselement (104), das entlang einer Drehachse (108) angeordnet ist;
einen Stator, der das Eingangselement zur Drehung um die Drehachse trägt; und
eine automatische Trennkupplung (100) nach Anspruch 1, die zwischen dem Stator und dem Eingangselement verbunden ist, wobei der Kern entlang einer Halterachse parallel zur Drehachse beweglich ist.

10. Generatoranordnung nach Anspruch 9, ferner umfassend einen Konstantdrehzahlantrieb (22), der mit dem Eingangselement (104) wirkverbunden ist.

11. Generatoranordnung nach Anspruch 10, wobei der Konstantdrehzahlantrieb (22) und das Eingangselement (104) in einem gemeinsamen Gehäuse (128) angeordnet sind; oder
wobei der Konstantdrehzahlantrieb in einem Zusatzgetriebe (20) untergebracht ist.

12. Verfahren zum automatischen Trennen eines Generatoreingangselements von einem Antriebselement in einer Generatoranordnung nach einem der Ansprüche 9-11, umfassend:
Anregen eines Halters mit einer Unwucht eines Generatoreingangselements;
Halten einer Verbindung des Eingangselements mit einem Antriebselement, wenn die Unwucht bei einer Grundfrequenz eines Halters unter einem vorbestimmten Wert liegt; und
Trennen des Eingangselements von dem Antriebselement, wenn die Unwucht den vorbestimmten Wert überschreitet.

13. Verfahren nach Anspruch 12, ferner umfassend erneutes Verbinden des Eingangselements mit dem Antriebselement und manuelles Trennen des Eingangselements von dem Antriebselement.

## Revendications

1. Accouplement de déconnexion automatique (100), comprenant :
un dispositif de retenue (112) ; et
un élément de sollicitation (124) couplé au dispositif de retenue (112) et agencé pour communiquer l'excitation d'un élément d'entrée de générateur (104) au dispositif de retenue (112),
dans lequel le dispositif de retenue (112) et l'élément de sollicitation ont une fréquence fondamentale adaptée à la vitesse de rotation de l'élément d'entrée de générateur pour déconnecter automatiquement l'élément d'entrée (104) d'un élément d'entraînement (18) lorsque le déséquilibre de rotation de l'élément d'entrée dépasse un niveau prédéterminé ; et
**caractérisé en ce que**,
un solénoïde (108) avec un noyau (130) et une bobine (132) fonctionnellement connectée au dispositif de retenue, dans lequel le dispositif de retenue est fixé par rapport au noyau du solénoïde, dans lequel le solénoïde est agencé pour communiquer un déséquilibre de rotation de l'élément d'entrée (104) comme excitation du dispositif de retenue et de l'élément de sollicitation, dans lequel le noyau est fixé par rapport au dispositif de retenue pour déplacer le dispositif de retenue entre la position verrouillée et la position déverrouillée le long de l'axe de retenue lors d'un actionnement manuel, dans lequel l'actionnement manuel est réalisé par application d'un courant d'actionnement à une bobine, dans lequel la bobine s'étend autour du noyau et se couple électromagnétiquement au noyau avec une force électromotrice lors de l'application d'un courant d'actionnement à la bobine, et un fil d'actionnement manuel (160) est connecté à la bobine pour appliquer un courant d'actionnement à la bobine, par exemple par actionnement par un commutateur d'opérateur disposé sur le poste de pilotage d'un aéronef ; et
dans lequel le solénoïde est couplé dynamiquement à l'élément d'entrée du générateur (104) par un agencement d'amortissement (120) avec un coefficient d'amortissement (122), dans lequel le coefficient d'amortissement est accordé de telle sorte qu'une fréquence fondamentale du dispositif de retenue et de l'élément de sollicitation est accordée à la vitesse de rotation de l'élément d'entrée.

2. Accouplement selon la revendication 1, comprenant également un fil de déconnexion manuelle connecté à la bobine de solénoïde (132) .

3. Accouplement selon la revendication 1, dans lequel le dispositif de retenue (112) a une position verrouillée et une position déverrouillée définie le long d'un axe de retenue (118), le dispositif de retenue retenant la connexion de l'élément d'entrée (104) à l'élément d'entraînement (18) en position verrouillée, l'élément d'entrée se séparant de l'élément d'entraînement lorsqu'il est déplacé depuis la position verrouillée.

4. Accouplement selon la revendication 1, comprenant également un plongeur (110) incliné par rapport au dispositif de retenue (112) et ayant des positions en prise et hors prise, dans lequel l'élément de sollicitation (132) sollicite le dispositif de retenue vers le plongeur pour verrouiller le plongeur dans la position hors prise.

5. Accouplement selon la revendication 4, dans lequel le plongeur (110) a une position en prise, le dispositif de retenue (112) étant agencé pour verrouiller le plongeur dans la position hors prise lorsque le déséquilibre de rotation de l'élément d'entrée (104) est inférieur au niveau prédéterminé ; ou
dans lequel le plongeur a une position hors prise, le dispositif de retenue étant agencé pour permettre le mouvement du plongeur vers la position en prise lorsque le déséquilibre de rotation de l'élément d'entrée est inférieur au niveau prédéterminé.

6. Accouplement selon la revendication 1, comprenant également un élément de sollicitation du plongeur (138) poussant le plongeur vers l'élément d'entrée (104).

7. Accouplement selon la revendication 1, dans lequel l'élément d'entrée (104) comporte des dents frontales (116) et une rampe (140), dans lequel les dents frontales et la rampe sont disposées sur une extrémité commune de l'élément d'entrée.

8. Accouplement selon la revendication 1, dans lequel l'élément d'entrée (104) comporte des dents frontales (116) et une rampe (140), dans lequel les dents frontales et la rampe sont disposées sur des extrémités opposées de l'élément d'entrée.

9. Agencement de générateur, comprenant :
un élément d'entrée (104) agencé le long d'un axe de rotation (108) ;
un stator supportant l'élément d'entrée pour une rotation autour de l'axe de rotation ; et
un accouplement de déconnexion automatique (100) selon la revendication 1, connecté entre le stator et l'élément d'entrée, le noyau étant mobile le long d'un axe de retenue parallèle à l'axe de rotation.

10. Agencement de générateur selon la revendication 9, comprenant également un entraînement à vitesse constante (22) connecté fonctionnellement à l'élément d'entrée (104).

11. Agencement de générateur selon la revendication 10, dans lequel l'entraînement à vitesse constante (22) et l'élément d'entrée (104) sont agencés à l'intérieur d'un boîtier commun (128) ; ou
dans lequel l'entraînement à vitesse constante est logé dans une boîte de vitesses d'accessoires (20).

12. Procédé de déconnexion automatique d'un élément d'entrée de générateur d'un élément d'entraînement dans un agencement de générateur selon l'une quelconque des revendications 9 à 11, comprenant :
l'excitation d'un dispositif de retenue avec déséquilibre de rotation d'un élément d'entrée de générateur ;
le maintien de la connexion de l'élément d'entrée avec un élément d'entraînement lorsque le déséquilibre de rotation à une fréquence fondamentale d'un dispositif de retenue est inférieur à une valeur prédéterminée ; et
la déconnexion de l'élément d'entrée de l'élément d'entraînement lorsque le déséquilibre de rotation dépasse la valeur prédéterminée.

13. Procédé selon la revendication 12, comprenant également la reconnexion de l'élément d'entrée à l'élément d'entraînement, et la déconnexion manuelle de l'élément d'entrée de l'élément d'entraînement.
